# EUROPÄISCHE PATENTSCHRIFT

(11) **EP 2 611 513 B1**
(45) Veröffentlichungstag und Bekanntmachung des Hinweises auf die Patenterteilung: **04.05.2016**
(21) Anmeldenummer: 11754854.5
(22) Anmeldetag: 29.08.2011
(51) Int. Cl.: B01D 19/02, B29C 47/00, B29B 7/84, B01D 19/00

(54) **FLUIDENTGASUNGS-VORRICHTUNG UND VERFAHREN ZUR ENTGASUNG VON FLUIDEN**
FLUID DEGASSING DEVICE AND METHOD FOR DEGASSING FLUIDS
DISPOSITIF ET PROCÉDÉ DE DÉGAZAGE DE FLUIDES

(30) Priorität: 30.08.2010 DE 102010039959
(43) Veröffentlichungstag der Anmeldung: 10.07.2013
(73) Patentinhaber: Wobben Properties GmbH, 26607 Aurich (DE)
(72) Erfinder: KAMKE, Ingo, 26487 Blomberg (DE)
(74) Vertreter: Eisenführ Speiser
(86) Internationale Anmeldenummer: PCT/EP2011/064808
(87) Internationale Veröffentlichungsnummer: WO 2012/028573

(56) Entgegenhaltungen:
- DE-C1- 10 013 409
- GB-A- 1 401 382
- RU-C1- 2 069 072
- US-A- 3 273 319
- US-A- 4 448 537

## Beschreibung

Die vorliegende Erfindung betrifft eine Vorrichtung und ein Verfahren zur Entgasung von Fluiden.

Bei der Produktion von Faserverbundbauteilen werden Kunstharze eingesetzt. Hierbei ist es wichtig, dass das Harz möglichst frei von Lufteinschlüssen bzw. Blasen ist, da sich derartige Lufteinschlüsse strukturschwächend auf das Material auswirken.

Somit muss also eine Entgasung des Harzes erfolgen. Bislang wird das Harz in Rührbehälter gefüllt und unter Vakuum aufgerührt. Die Materialentgasung findet dabei lediglich im oberflächennahen Bereich statt.

Eine weitere Variante zur Harzentgasung stellt die sogenannte Dünnschichtentgasung dar. Wie bereits vorstehend angeführt, ereignet sich die Entgasung insbesondere an der Oberfläche, während die hohe Viskosität des Harzes die Gasblasen aus der Tiefe nur langsam an die Oberfläche steigen lässt und deshalb eine Entgasung schwierig ist. Dadurch sind hohe Verweilzeiten notwendig.

Alternativ dazu können auch semipermeable Folien eingesetzt werden, um eine Harzentgasung zu ermöglichen.

Als allgemeiner Stand der Technik wird auf die WO 2003/064144 A1 und die US 3,229,449 A verwiesen.

US 3,273,319 zeigt eine Fluidentgasungs-Vorrichtung mit einem als Gitter ausgebildeten Strukturelement zum Entgasen des Fluids.

GB 1 401 382 zeigt eine Fluidentgasungs-Vorrichtung mit einem als Fließstoff ausgebildeten Strukturelement.

Es ist somit Aufgabe der vorliegenden Erfindung, eine verbesserte kontinuierliche Entgasung eines Harzes vorzusehen.

Diese Aufgabe wird durch eine Vorrichtung zum Entgasen von Fluiden gemäß Anspruch 1 sowie durch ein Verfahren zum Entgasen von Fluiden gemäß Anspruch 9 gelöst.

Nachfolgend wird die Erfindung anhand der Ausführungsbeispiele und unter Bezugnahme auf die Zeichnungen näher erläutert.
- Fig. 1: zeigt eine schematische Schnittansicht einer Harzentgasungsvorrichtung,
- Fig. 2: zeigt eine schematische Schnittansicht eines ersten Endes einer Entgasungsvorrichtung gemäß einem Ausführungsbeispiel der Erfindung,
- Fig. 3: zeigt eine schematische Schnittansicht eines Überganges zwischen einer ersten und zweiten Kammer der Entgasungsvorrichtung von Figur 1,
- Fig. 4: zeigt eine schematische Schnittansicht eines weiteren Überganges zwischen der zweiten Kammer und einer dritten Kammer in der Entgasungsvorrichtung gemäß Figur 1, und
- Fig. 5: zeigt eine schematische Schnittansicht eines detaillierten Ausschnitts eines Endes der dritten Kammer der Entgasungsvorrichtung.

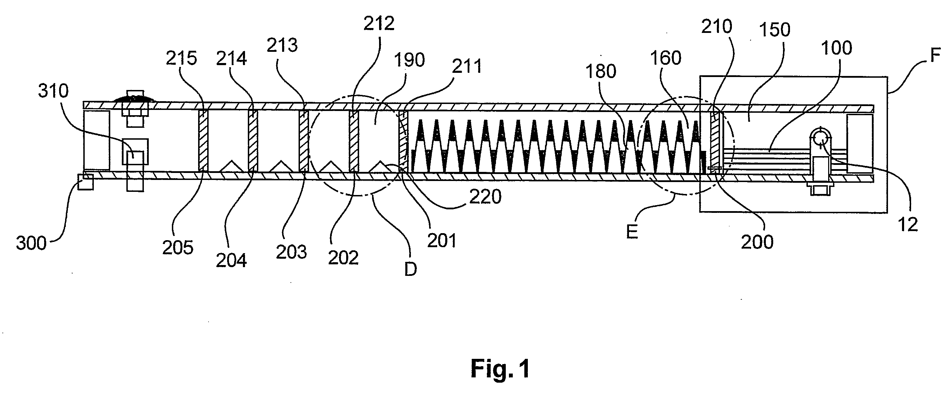

Fig. 1 zeigt eine schematische Schnittansicht einer Harzentgasungsvorrichtung gemäß einem ersten Ausführungsbeispiel. Diese Vorrichtung dient der Entgasung und kann dabei mit einem Schwenklager 300 vorgesehen werden, über den die Entgasungsvorrichtung einstellbar ist. Durch den Neigungsgrad lässt sich die Fließgeschwindigkeit des Harzes einstellen. Die Neigung der Vorrichtung kann dabei zwischen 1 und 10 % eingestellt werden und bestimmt die Harzschichtdicke und die Verweilzeit im Vakuum, also letztlich die Entgasungsqualität.

Das zu entgasende Harz wird durch einen Stutzen 12 in eine erste Kammer 150 eingeführt. Anschließend fließt das Harz durch eine zweite Kammer 160 in eine dritte Kammer 190, um dann über einen Abfluss 310 abzufließen. In der ersten Kammer 150 fließt das Harz aus dem Zufuhrstutzen 12 durch ein Vlies 100 zum Boden der ersten Kammer 150, um durch einen ersten Spalt 200 bzw. eine Öffnung in einer ersten Wand 210 zwischen der ersten und zweiten Kammer 150, 160 in die zweite Kammer 160 zu fließen. In der zweiten Kammer sind mehrere Gitter 180 aufgespannt. Das Harz muss durch die Gitter 180 fließen, so dass Blasen in dem Harz entfernt werden können. Durch einen zweiten Spalt bzw. Öffnung 201 in einer zweiten Wand 211 zwischen der zweiten und dritten Kammer 160, 190 fließt das Harz in die dritte Kammer 190. In der dritten Kammer 190 sind eine Vielzahl von Profilen 220 vorgesehen, über welche das Harz fließt. Somit wird in der dritten Kammer der oberflächennahe Bereich des Harzes vergrößert, was sich positiv bei der Entgasung auswirkt. Am Ende der dritten Kammer 190 ist ein Abfluss 310 vorgesehen, über welchen das entgaste Harz wieder abfließen kann.

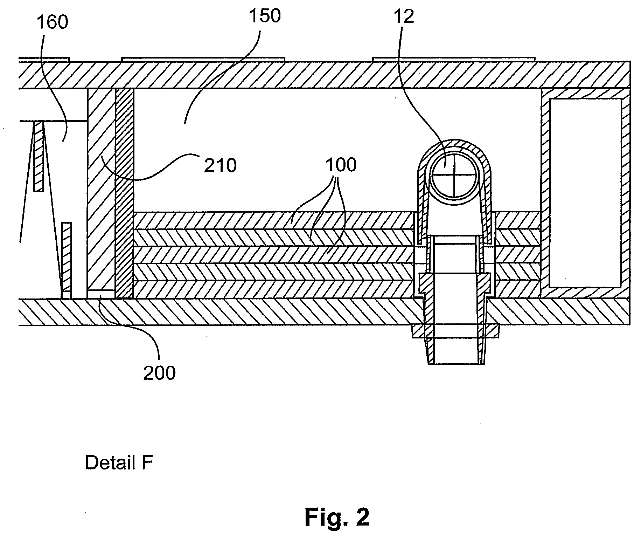

Fig. 2 zeigt eine schematische Schnittansicht eines ersten Endes (Detail F) der Entgasungsvorrichtung von Fig. 1. Das Harz wird durch eine Zuführung (Stutzen) 12 in den Behälter, d.h. in die erste Kammer 150, eingeführt. Unter der Zuführung 12 ist mindestens eine Lage von Vliesstoff 100 vorgesehen. Der Vliesstoff 100 sollte dabei derart ausgestaltet sein, dass das Harz langsam durchfließen kann. Durch die Struktur des Vlieses können somit bereits die ersten Blasen aus dem Harz entfernt werden. Das Harz fließt somit durch den Vliesstoff 100 und durch einen ersten Spalt bzw. Öffnung 200 in der ersten Wand 210 von der ersten Kammer 150 in die zweite Kammer 160.

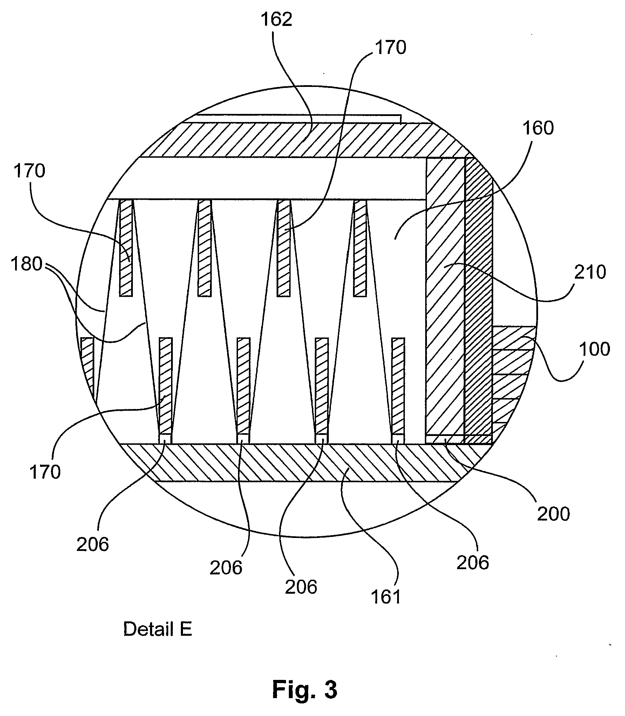

Fig. 3 zeigt eine detaillierte Ansicht des Details E von Fig. 1, d. h. des Überganges zwischen der ersten und zweiten Kammer 150, 160 von Fig. 1. In der zweiten Kammer 160 sind eine Vielzahl von Querstreben 170 jeweils an der Decke und an dem Boden der Kammer 160 angeordnet. Zwischen den jeweiligen Querstreben 170 sind Gitter 180 gespannt, welche z. B. eine Maschenweite von einigen Millimetern aufweisen. Das durch die erste Öffnung 200 in der ersten Wand 210 in die zweite Kammer 160 fließende Harz muss die erste Querstrebe 170 am Boden der Kammer überwinden und fließt somit über diese Querstrebe 170, so dass das Harz beim Herunterfließen von der Querstrebe 170 durch das Gitter 180 fließen muss. Zusätzlich können die Querstreben 170 optional Spalte 206 am Boden der zweiten Kammer 160 aufweisen. Somit wird durch das Vorsehen der Querstreben 170 erreicht, dass das Harz an den Querstreben 170 hochfließt, so dass die Oberfläche das Harzes vergrößert wird, was zu einer verbesserten Entgasung führt. Ferner muss das Harz beim Runterfließen von den Querstreben 170 durch die Gitter 180 fließen, welche eine weitere Entgasung des Harzes bewirken.

Der erste Spalt 200 kann dabei relativ dünn ausgewählt werden, um eine dadurch fließende relativ dünne Harzschicht zu erreichen, so dass die Blasen in den oberflächennahen Bereich gebracht werden. Mittels der Temperatur kann die Viskosität bzw. die Fließgeschwindigkeit eingestellt werden. Die Gitter 180 können auch mehrlagig ausgestaltet werden. Die Gitterstruktur kann dabei aus Kunststofffaser oder Metall ausgestaltet sein, so lange sichergestellt ist, dass das Gitter nicht vom Harz angelöst bzw. aufgelöst wird.

Somit stellt die Gitterstruktur einen Parameter bei der Harzentgasung dar. Die Querstreben 170 müssen nicht notwendigerweise direkt mit dem Boden der linken Kammer 160 abschließen, sondern es können auch Spalte zwischen den Querstreben und dem Boden der linken Kammer 160 vorhanden sein, so dass der Durchsatz bei der Harzentgasung vergrößert werden kann.

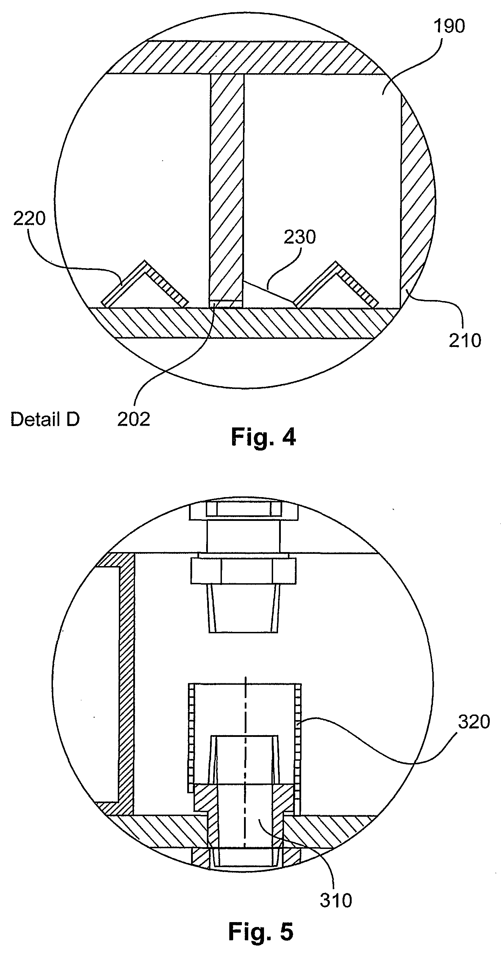

Fig. 4 zeigt ein Detail D von Fig. 1, d. h. einen Übergang zwischen der zweiten Kammer 160 und einer dritten Kammer 190, welche sich links an die zweite Kammer 160 anschließt. Die zweite Trennwand 211 zwischen der zweiten Kammer 160 und der dritten Kammer 190 weist wiederum einen zweiten Spalt 201 an ihrer unteren Seite auf. Somit wird das Harz wiederum dazu gezwungen, durch diesen dünnen zweiten Spalt 201 zu fließen, wodurch die Oberfläche bzw. der oberflächennahe Bereich weiter vergrößert wird.

In der dritten Kammer 190 sind Profile 220 derart angeordnet, dass das Harz über die Profile fließen muss, so dass es zu einer weiteren Vergrößerung der Oberfläche bzw. des oberflächennahen Bereichs des Harzes kommt. Vorteilhafterweise werden die Profile 220 so über Kopf angeordnet, dass das Harz darüber fließen kann. Die Profile können konvex ausgestaltet sein. Die dritte Kammer 190 kann durch mehrere Trennwände 212 - 215 jeweils mit einem Spalt 202 - 205 aufgeteilt werden. In jeder der aufgeteilten Kammern ist wenigstens ein Profil 220 angeordnet. Dadurch, dass die Spalte 202 - 205 zwischen den Kammern bzw. Abschnitten in der weiteren Kammer 190 lediglich sehr schmal ausgestaltet sind, fließt lediglich eine geringe Menge von Harz durch den Spalt 202 - 205, so dass sich vor dem Spalt Harz anstauen kann, d. h. es kommt zu einem Harz-Stau 230. Dadurch, dass lediglich ein dünner Harzfilm über die Kanten der Profile 220 fließt, wird der oberflächennahe Bereich vergrößert, was sich positiv bei der Entgasung auswirkt.

Fig. 5 zeigt ein Detail H von Fig. 1, d. h. einen linken Ausschnitt des linken Endes der dritten Kammer 190. Hier ist ein Abflussstutzen 310 gezeigt, welcher nicht unten im Boden liegt, sondern derart hochgelegt worden ist, dass lediglich die oberste Schicht des Harzes abgeschöpft wird. Zusätzlich kann noch ein weiteres Gitter 320 vorgesehen werden, um weitere Blasen aus dem Harz zu entfernen.

Mit einer derartigen Vorrichtung kann eine Entgasung von deutlich mehr als 90 % des Harzes erreicht werden. Die gesamte Vorrichtung wird unter Vakuum betrieben. Der Druck liegt dabei bei ungefähr 10 mbar.

Das Harz, welches durch die oben beschriebene Fluidentgasungs-Vorrichtung entgast worden ist, kann zur Herstellung eines Windenergieanlagen-Rotorblattes verwendet werden. Alternativ dazu kann das durch die Fluidentgasungs-Vorrichtung entgaste Harz ebenfalls zur Herstellung von anderen Komponenten einer Windenergieanlage verwendet werden.

## Patentansprüche

1. Fluidentgasungs-Vorrichtung zur Entgasung von Harzen, mit
einem Fluid-Zuführelement (12) zum Zuführen des Harzes,
einem Fluid-Abführelement (310) zum Abführen des Harzes,
**gekennzeichnet durch**
eine erste Kammer (150), in die das Harz **durch** das Harz-Zuführelement (12) zugeführt wird, mit mindestens einem als Vliesstoff ausgebildeten ersten Strukturelement (100) zum Zerstören von Blasen im Harz, **durch** welches das Harz zwischen dem Zuführelement (12) und dem Abführelement (310) durchgeleitet wird,
eine zweite Kammer (160), welche sich an die erste Kammer (150) anschließt, mit mindestens einem als Gitter ausgebildeten zweiten Strukturelement (180), über welches das Harz geleitet wird, und
eine dritte Kammer (190), welche sich an die zweite Kammer (160) anschließt, mit mindestens einem konvexen Element (220) als Profilelement (220), über welches das Harz zwischen dem Zuführelement (12) und dem Abführelement (310) fließt.

2. Vorrichtung nach Anspruch 1, wobei eine Trennwand zwischen der ersten und zweiten Kammer (150, 160) mindestens einen ersten Spalt (200) aufweist.

3. Vorrichtung nach Anspruch 1, wobei eine zweite Trennwand zwischen der zweiten und dritten Kammer (160,190) mindestens einen zweiten Spalt (201) aufweist.

4. Vorrichtung nach einem der Ansprüche 1 bis 3, mit einer Schwenkachse (300) zum Schwenken der Vorrichtung.

5. Vorrichtung nach einem der Ansprüche 1 bis 4, ferner mit einem Gitterelement (320), welches um das Harz-Abführelement (310) herum angeordnet ist.

6. Verfahren zum Entgasen von Harzen mit den Schritten:
Zuführen eines Harzes,
Zerstören von Blasen in dem Harz,
Abführen des Harzes,
**gekennzeichnet durch**
Zerstören von Blasen in dem Harz **durch** Durchleiten des Harzes **durch** mindestens ein als Vliesstoff ausgebildetes erstes Strukturelement (100) in einer ersten Kammer (150), **durch** Durchleiten des Harzes **durch** ein als Gitter ausgebildetes zweites Strukturelement (180) in einer zweiten Kammer, und
Leiten des Harzes über mindestens ein als konvexes Element ausgebildetes Profilelement in einer dritten Kammer (190).

## Claims

1. Fluid degasification device for degasification of resins, having
a fluid supply element (12) for supplying the resin,
a fluid discharge element (310) for discharging the resin, **characterised by**
a first chamber (150) into which the resin is supplied by the resin supply element (12) and which has at least a first structural element (100) which is constructed as a non-woven fabric for destroying bubbles in the resin and through which the resin is directed between the supply element (12) and the discharge element (310),
a second chamber (106) which adjoins the first chamber (150) and which has at least a second structural element (180) which is constructed as a grid and by means of which the resin is directed, and
a third chamber (190) which adjoins the second chamber (160) and which has at least one convex element (220) as a profile element (220) and via which the resin flows between the supply element (12) and the discharge element (310).

2. Device according to claim 1, wherein a partition wall between the first and second chambers (150, 160) has at least a first gap (200).

3. Device according to claim 1, wherein a second partition wall between the second and third chambers (160, 190) has at least a second gap (201).

4. Device according to any one of claims 1 to 3, having a pivot axis (300) for pivoting the device.

5. Device according to any one of claims 1 to 4, further having a grid element (320) which is arranged around the resin discharge element (310).

6. Method for degasification of resins with the steps of:
supplying a resin,
destroying bubbles in the resin,
discharging the resin,
**characterised by**
destroying bubbles in the resin by directing the resin through at least a first structural element (100) which is constructed as a non-woven fabric in a first chamber (150), by guiding the resin through a second structural element (180) which is constructed as a grid in a second chamber, and
directing the resin via at least one profile element which is constructed as a convex element in a third chamber (190).

## Revendications

1. Dispositif de dégazage de fluides permettant le dégazage de résines, comprenant
un élément d'acheminement de fluides (12) permettant d'acheminer la résine,
un élément d'évacuation de fluide (310) permettant d'évacuer la résine,
**caractérisé par**
une première chambre (150) dans laquelle la résine est acheminée à travers l'élément d'acheminement de résine (12), comprenant au moins un premier élément structural (100) réalisé sous la forme d'un non-tissé servant à détruire des bulles dans la résine et à travers lequel la résine est amenée à passer entre l'élément d'acheminement (12) et l'élément d'évacuation (310),
une deuxième chambre (160), laquelle est adjacente à la première chambre (150), comprenant au moins un deuxième élément structural (180) réalisé sous la forme d'une grille et par l'intermédiaire duquel la résine est guidée, et
une troisième chambre (190), laquelle est adjacente à la deuxième chambre (160), comprenant au moins un élément convexe (220) réalisé sous la forme d'un élément profilé (220), par l'intermédiaire duquel la résine circule entre l'élément d'acheminement (12) et de l'élément d'évacuation (310).

2. Dispositif selon la revendication 1, une cloison entre la première et la deuxième chambre (150, 160) comprenant au moins une première fente (200).

3. Dispositif selon la revendication 1, une deuxième cloison entre la deuxième et la troisième chambre (160, 190) comprenant au moins une deuxième fente (201).

4. Dispositif selon l'une quelconque des revendications 1 à 3, comprenant
un axe de pivotement (300) permettant de faire pivoter le dispositif.

5. Dispositif selon l'une quelconque des revendications 1 à 4, comprenant en outre
un élément de grille (320), lequel est disposé autour de l'élément d'évacuation de résine (310).

6. Procédé de dégazage de résines comprenant les étapes :
l'acheminement d'une résine,
la destruction de bulles dans la résine,
l'évacuation de la résine,
**caractérisé par**
la destruction de bulles dans la résine en faisant passer la résine à travers au moins un premier élément structural (100) réalisé sous la forme d'un non-tissé dans une première chambre (150), en faisant passer la résine à travers un deuxième élément structural (180) réalisé sous la forme d'une grille dans une deuxième chambre, et
l'amenée de la résine dans une troisième chambre (190) par l'intermédiaire d'au moins un élément profilé réalisé sous la forme d'un élément convexe.
